# EUROPÄISCHE PATENTSCHRIFT

(11) **EP 1 167 743 B1**
(45) Veröffentlichungstag und Bekanntmachung des Hinweises auf die Patenterteilung: **29.09.2004**
(21) Anmeldenummer: 01113457.4
(22) Anmeldetag: 02.06.2001
(51) Int. Cl.: F02M 35/10, F02M 35/022, F02M 35/16, B01D 45/12

(54) **Ansaugsystem mit Wasserabscheider**
Intake system with water separator
Système d'admission d'air avec séparateur d'eau

(30) Priorität: 21.06.2000 DE 10029498
(43) Veröffentlichungstag der Anmeldung: 02.01.2002
(73) Patentinhaber: Mann + Hummel GmbH, 71638 Ludwigsburg (DE)
(72) Erfinder: Trautmann, Pius, Dr., 70499 Stuttgart (DE); Weber, Andreas, 71642 Ludwigsburg (DE)
(74) Vertreter: Voth, Gerhard, Dipl.-Ing.

(56) Entgegenhaltungen:
- EP-A- 0 965 378
- WO-A-96/11047
- DE-A- 3 920 767
- FR-A- 887 574
- US-A- 4 255 174

## Beschreibung

### Stand der Technik

Die Erfindung betrifft Ansaugsystem nach dem Oberbegriff des Patentanspruches 1.

Die EP 0 965 378 offenbart eine Vorrichtung zur Abscheidung von Wasser aus der Ansaugluft für eine Brennkraftmaschine. Diese Vorrichtung besitzt einen Einlass und einen Auslass, wobei zwischen dem Einlass und dem Auslass ein Wasserabscheider angeordnet ist. Der Auslass ragt teilweise in den Wasserabscheider hinein. In dem Wasserabscheider ist eine, durch den Auslass gebildete Umlenkkante beabstandet zu eine Prallfläche angeordnet. Weiterhin verfügt der Abscheider über einen Wasserauslass.

Es ist aus der JP 59203860 ein Ansaugsystem für eine Brennkraftmaschine eines Kraftfahrzeuges bekannt, welches über einen Lufteinlass verfügt. Der Lufteinlass ist im Frontbereich des Kraftfahrzeuges angeordnet, wodurch Luft durch die Fahrt in den Lufteinlass hineingedrückt wird. Die Luft wird in einem Verbindungsrohr von dem Lufteinlass tangential zu einem zylindrischen Wasserabscheider geführt. In dem Wasserabscheider wird die Luft in eine Rotation versetzt, wodurch die, in der Luft enthaltenen Wassertropfen gegen den zylindrischen Wasserabscheider prallen und über das, am unteren Ende des Wasserabscheiders angeordnete automatische Wasserablassventil abgelassen werden. Die entfeuchtete Luft strömt durch eine zentral in dem Wasserabscheider angeordnete Verbindungsleitung in eine Ansaugleitung, welche mit der Brennkraftmaschine verbunden ist. Die Verbindungsleitung ragt in den Wasserabscheider hinein, wodurch die Luft vor dem Eintritt in die Verbindungsleitung ihre radiale Strömungsrichtung in eine axiale Strömungsrichtung ändern muß.

Durch die abrupte Änderung der Strömungsrichtung erfolgt jedoch ein großer Druckverlust in dem Ansaugsystem, wodurch dem Motor weniger Luft zugeführt werden kann, oder das Ansaugsystem größer dimensioniert werden muß. Weiterhin besteht die Gefahr, dass sich Wassertropfen an der in den Wasserabscheider hineinragenden Verbindungsleitung abscheiden. Diese Wassertropfen werden dann von der Luft mit in die Verbindungsleitung gerissen, wodurch der Abscheidegrad des Wasserabscheiders verschlechtert wird. Die Aufgabe der Erfindung besteht darin, die oben genannten Nachteile zu vermeiden. Diese Aufgabe wird durch die Merkmale des Patentanspruches 1 gelöst.

### Vorteile der Erfindung

Das erfindungsgemäße Ansaugsystem für eine Brennkraftmaschine eines Kraftfahrzeuges weist zumindest einen Rohlufteinlass und eine mit dem Rohlufteinlass verbundene Rohluftleitung auf, welche korrespondierend mit der Brennkraftmaschine verbunden ist. Der Rohlufteinlass ist bei besonderen Ausführungen im Frontbereich des Kraftfahrzeuges angeordnet, wodurch die Ansaugluft während der Fahrt in das Ansaugsystem hineingedrückt wird und somit der Brennkraftmaschine mehr Luft zuführbar ist. Da bei dieser frontalen Luftansaugung auch Wassergischt, insbesondere kleine, mit der Ansaugluft vermischte Wassertropfen, welche durch z.B. ein vorausfahrendes Fahrzeug bei nasser Fahrbahn oder starken Regenfall erzeugt sein kann, in das Ansaugsystem gelangt, ist ein Wasserabscheider vorgesehen, welcher mit der Rohluftleitung verbunden ist. Die Rohluftleitung ist derart ausgeführt, dass ein Drall erzeugbar ist. Dieser Drall kann z.B. durch eine spezielle Führung der Rohluftleitung, insbesondere durch zwei 90° Biegungen im 3-dimensionalen Raum erzeugt sein. Weiterhin können aber auch Mittel zur Drallerzeugung, wie z.B. Leitschaufeln in der Rohluftleitung vorgesehen sein. Der Drall muß die Ansaugluft in eine Rotation versetzen, welche ausreichend ist, die in der Ansaugluft enthaltenen Wassertropfen gegen die Wand der Rohluftleitung zu schleudern, wodurch sich die Wassertropfen an der Wand abscheiden und die Ansaugluft im Mittenbereich der Rohluftleitung keine Wassertropfen mehr enthält.

Der Wasserabscheider weist ein Innenrohr und ein Außenrohr auf, welche in axialer Richtung, insbesondere koaxial zueinander angeordnet sind, wobei die gedanklichen Mittelachsen sowohl in der Höhe, als auch im Winkel zueinander einen Versatz aufweisen können. Hierbei stellt eine konzentrische Ausführung der gedanklichen Mittelachsen eine vorteilhafte Ausbildung dar. Das Innenrohr kann mit dem Außenrohr sowohl einteilig, als auch mehrteilig ausgeführt sein. Der Wasserabscheider kann z.B. vollständig aus Kunststoff oder Metall gefertigt sein oder durch eine Materialkombination verschiedener Werkstoffe gebildet werden. Durch den in axialer Richtung zueinander angeordneten Aufbau des Wasserabscheiders wird die Ansaugluft in dem Wasserabscheider nicht umgelenkt, wodurch keine Druckverluste entstehen. Weiterhin ist der Wasserabscheider koaxial zu der Rohluftleitung angeordnet. Das Innenrohr ragt in das Außenrohr hinein, wobei das Außenrohr über einen Wasserauslass verfügt, durch welchen das abgeschiedene Wasser aus dem Ansaugsystem entfernbar ist. Der Wasserauslass kann z.B. über eine Verbindungsleitung mit einem Wassersammelbehälter, einem Wasserverbraucher oder der Umgebung verbunden sein, wodurch das Wasser aus dem Außenrohr ausgetragen werden kann. Die Querschnitte der Rohluftleitung, sowie des Innenrohres und des Außenrohres sind beliebig ausführbar, wobei z.B. ovale oder polygonförmige Querschnitte verwendet werden können. Vorteilhafterweise werden Querschnitte gewählt, welche den Drall nur geringfügig beeinflussen. Besonders vorteilhaft ist eine kreisförmige Ausgestaltung der Querschnitte, welche den Drall nicht beeinflusst und somit geringste Reibungsverluste erzeugt und beste Abscheideergebnisse erzielt werden.

Die bereits an der Wand des Rohlufteinlasses abgeschiedenen Wassertropfen werden durch die Luftströmung zu dem Wasserauslass befördert, wo sie aus dem Ansaugsystem ausgetragen werden. Das erfindungsgemäße Ansaugsystem ermöglicht eine einfache und kostengünstige Wasserentfernung aus dem Ansaugsystem, wobei geringste Druckverluste realisierbar sind und nahezu kein Einbauraum für wasserabscheidende Bauteile benötigt werden. Weiterhin ist diese Art der Wasserabscheidung wartungsfrei.

Es ist vorteilhaft, dass das Außenrohr über einen sich erweiternden Abscheidebereich verfügt, wodurch das an der Wand abgeschiedene Wasser nicht mehr in die Ansaugluft hineingerissen werden kann. Der sich erweiternde Abscheidebereich ist derart ausgeführt, dass die Luftströmung nicht abreißt. Hierbei können z.B. Erweiterungswinkel von 0° bis 60° realisiert werden, wobei Erweiterungswinkel im Bereich von 20° bis 30° besonders vorteilhafte Abscheidungsgrade erzeugen.

Gemäß einer weiteren Ausgestaltung der Erfindung verfügt das Innenrohr über einen sich erweiternden Verzögerungsbereich, wodurch Druckverluste in der Ansaugluft ausgeglichen werden können. In dem Verzögerungsbereich wird der Querschnitt vergrößert, wodurch die Ansaugluftströmung verlangsamt und ein Druckanstieg erzeugt wird. Dadurch wird die Aufladung des Ansaugsystems und somit der Brennkraftmaschine verbessert.

Bei einer weiteren Variante der Erfindung ist an dem Innenrohr ein Spritzkragen angeordnet, welcher ein Zurücklaufen des abgeschiedenen Wassers in die entfeuchtete Ansaugluft verhindert. Dieser Spritzkragen ist derart ausgestaltet, dass auch bei größerem Wasseranfall kein Wasser in das Innenrohr gelangen kann.

Es ist vorteilhaft, dass der Wasserauslass tangential in Drallrichtung angeordnet ist, wodurch das abgeschiedene Wasser durch den Drall in den Wasserauslass gedrückt wird. Hierbei ist ein trichterförmig ausgeführter Wasserauslass besonders vorteilhaft, da das Wasser zusätzlich zu der Drallkraft durch die eigene Gewichtskraft in den Wasserauslass gelangt.

Gemäß einer weiteren Ausgestaltung der Erfindung verfügt der Wasserauslass über ein Auslassventil, welches den Wasserauslass nur in eine Richtung öffnet und über eine Drucksteuerung verfügt, wodurch über den Wasserauslass keine Luft angesaugt werden kann. Der erforderliche Öffnungsdruck des Auslassventiles entspricht mindestens dem Widerstand der Rohluftleitung.

Bei einer besonderen Ausführung der Erfindung ist das Innenrohr direkt mit einem, dem Wasserabscheider nachgeordneten Filtergehäuse verbunden, wodurch die entfeuchtete Luft direkt in das Filtergehäuse, wo sie gereinigt wird, einströmen kann. Durch die Verbindung des Wasserabscheiders mit dem Filtergehäuse kann die Bauteilanzahl reduziert werden, da Anschlussstücke für den Wasserabscheider entfallen.

Gemäß einer vorteilhaften Ausgestaltung der Erfindung verfügt das Außenrohr über einen zylindrischen Außenbereich mit einem ersten Durchmesser. Der zylindrische Außenbereich ist einerseits mit der Rohluftleitung und andererseits mit dem Abscheidebereich verbunden. Der Abscheidebereich ist konisch ausgebildet und verfügt über einen zweiten Durchmesser, welcher größer ist, als der erste Durchmesser. Weiterhin verfügt das Außenrohr über einen Austragsbereich mit einem dritten Durchmesser, welcher mit dem zweiten Durchmesser verbunden ist. Der dritte Durchmesser ist jedoch größer, als der zweite Durchmesser, wodurch eine Wasserabrisskante erzeugt ist. Diese Wasserabrisskante verhindert, dass das abgeschiedene Wasser in das Innenrohr gelangt. Das Innenrohr verfügt über einen zylindrischen Einlassbereich mit einem ersten Innendurchmesser, wobei der Einlassbereich über die Wasserabrisskante ragt. Der Einlassbereich ist mit einem konischen Verzögerungsbereich verbunden. An den Verzögerungsbereich schließt dem Einlassbereich gegenüberliegend ein Auslassbereich mit einem zweiten Innendurchmesser an, wobei der erste Innendurchmesser kleiner ist, als der zweite Innendurchmesser. Weiterhin ist das Innenrohr dichtend mit dem Außenrohr verbunden.

Es ist vorteilhaft, dass der erste Durchmesser des Außenrohres größer ist, als der erste Innendurchmesser des Innenrohres. Dadurch gelangt nur die entfeuchtete Luft in den Einlassbereich und Wassertropfen werden nicht mitgerissen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigt
- Figur 1: ein Ansaugsystem im Schnitt,
- Figur 2: einen Wasserabscheider im Schnitt entlang der Schnittlinie A-A gemäß Figur 1,
- Figur 3: ein Ansaugsystem im Schnitt
- Figur 4: eine schematische Darstellung eines Ansaugsystems in der Hauptansicht und
- Figur 5: eine schematische Darstellung eines Ansaugsystems in der Seitenansicht.

### Beschreibung der Ausführungsbeispiele

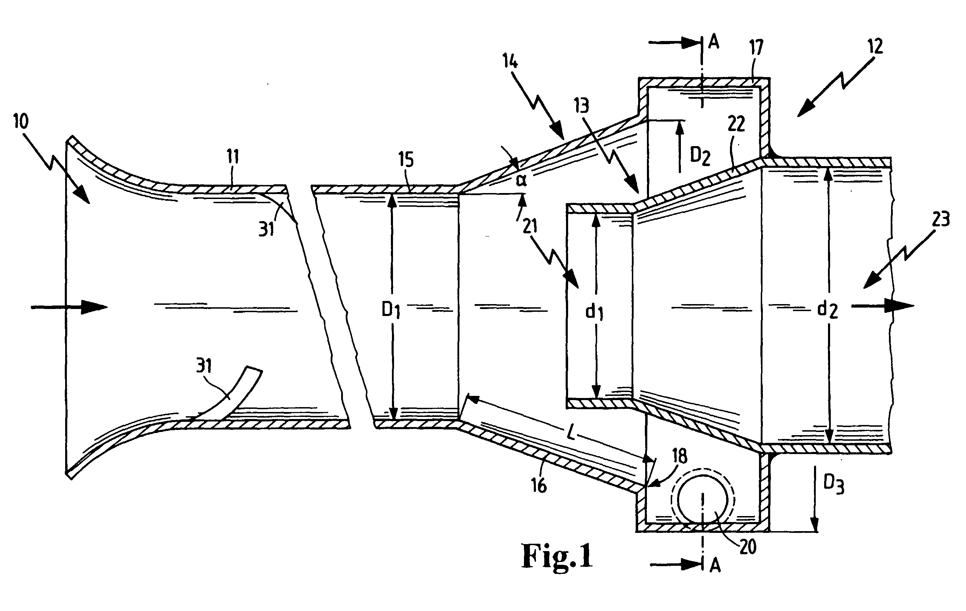

In Figur 1 ist ein Ansaugsystem im Schnitt dargestellt. Das Ansaugsystem weist einen Rohlufteinlass 10 auf, welcher in eine Rohluftleitung 11 mündet. Die Rohluftleitung ist kommunizierend mit einer Brennkraftmaschine eines Kraftfahrzeuges (nicht dargestellt) verbunden. An die Rohluftleitung 11 schließt ein Wasserabscheider 12 an, welcher über ein Innenrohr 13 und ein Außenrohr 14 verfügt. Das Außenrohr 14 ist bei diesem Ausführungsbeispiel mit der Rohluftleitung 11 einteilig ausgeführt. Das Innenrohr 13 ist dichtend in das Außenrohr 14 gesteckt und verschweißt, damit sich das Innenrohr 13 nicht unkontrolliert aus dem Außenrohr 14 löst. Es kann aber auch jede andere lösbare oder unlösbare Verbindung verwendet werden, um das Außenrohr 14 mit dem Innenrohr 13 zu verbinden.

In der Rohluftleitung 11 wird die in Pfeilrichtung eintretende Luft in einen Drall versetzt. Der Drall wird durch Leitschaufeln 31 erzeugt, welche in der Rohluftleitung 11 angeordnet sind. Die Leitschaufeln 31 können durch entsprechend geformte und angeordnete Einzelleitschaufeln gebildet werden, wobei auch eine einteilig ausgebildete Leitschaufel 31, welche über einen längeren Bereich der Rohluftleitung 11 ragt, denkbar ist. Durch den Drall der Luft werden die in der Luft enthaltenen Wassertropfen nach außen geschleudert, wo sie sich an der Rohluftleitung 11 abscheiden.

Der Wasserabscheider 12 verfügt an dem Außenrohr 14 über einen zylindrischen Außenbereich 15 mit einem ersten Durchmesser D1, welcher übergangslos mit der Rohluftleitung 11 verbunden ist. An den zylindrischen Außenbereich 15 schließt ein konisch ausgebildeter Abscheidebereich 16 an, welcher mit einem zweiten Durchmesser D2 endet. Der Abscheidebereich 16 weist einen Winkel α auf, welcher vorzugsweise zwischen 20° und 30° liegt. Der Winkel α ist derart zu wählen, dass das Wasser ohne Strömungsabriss von dem zylindrischen Außenbereich 15 in den Abscheidebereich 16 strömt. Die Länge L des Abscheidebereiches 16 ist derart zu wählen, dass sie zum Abscheiden des Wassers ausreicht. An den Abscheidebereich 16 schließt im Bereich des zweiten Durchmessers D2 ein Austragsbereich 17 an, welcher einen Durchmesser D3 aufweist. Der Durchmesser D3 ist größer als der Durchmesser D2, wodurch eine Wasserabrisskante 18 entsteht. In dem zylindrischen Austragsbereich 17 ist ein Wasserauslass 20 tangential in Drallrichtung angeordnet, wodurch das abgeschiedene Wasser mit Hilfe des Dralls aus dem Ansaugsystem entfernt wird.

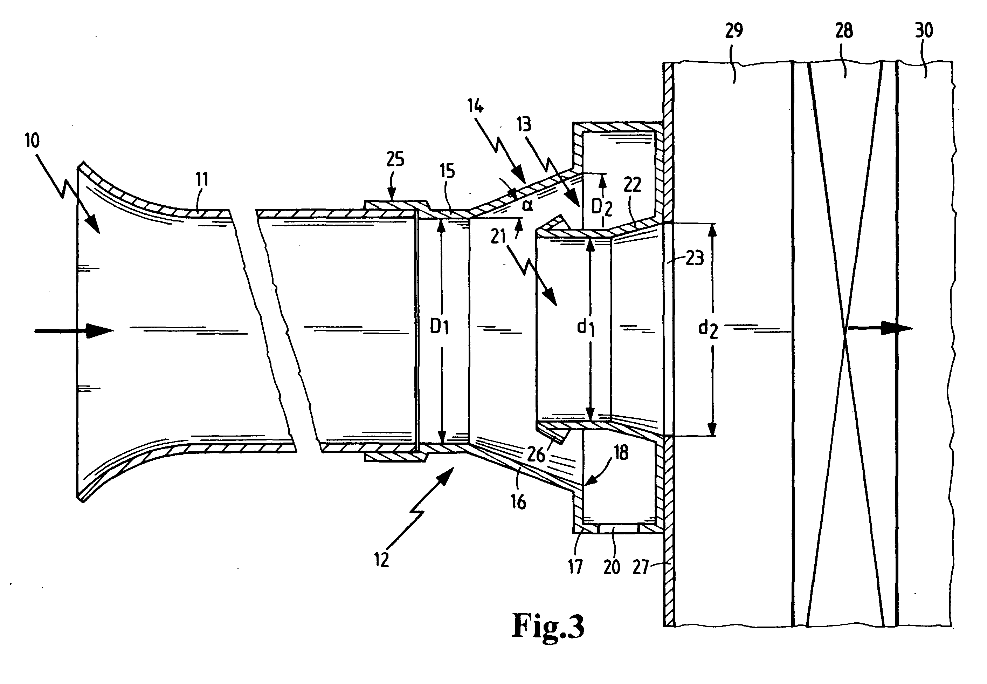

Das Innenrohr 13 weist einen zylindrischen Einlassbereich 21 mit einem ersten Innendurchmesser d1 auf, wobei der erste Innendurchmesser d1 kleiner als der erste Durchmesser D1 ist. An den Einlassbereich 21 schließt ein konischer Verzögerungsbereich 22 an, in welchem die durch den Einlassbereich 21 eingetretene Luft verlangsamt wird, wodurch eine bessere Aufladung der Brennkraftmaschine erzielt wird. An den Verzögerungsbereich 22 schließt ein Auslassbereich 23 mit einem zweiten Innendurchmesser d2 an. Dieser Auslassbereich 23 kann z.B. in ein Filtergehäuse (gemäß Figur 3) münden, welchem ein Ansaugluftverteiler (nicht dargestellt) nachgeordnet sein kann.

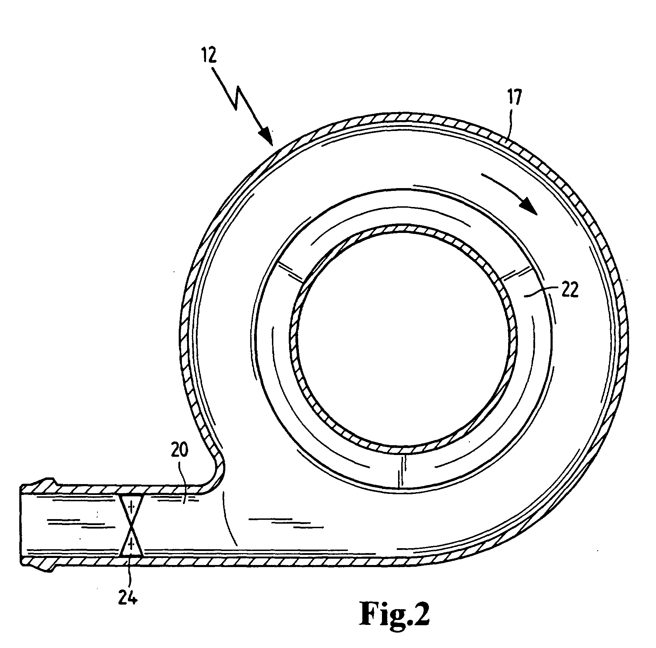

In Figur 2 ist ein Wasserabscheider 12 im Schnitt entlang der Schnittlinie A-A gemäß Figur 1 dargestellt. Der Figur 1 entsprechende Bauteile sind mit gleichen Bezugszeichen versehen. Der Drall der angesaugten Luft verläuft in Pfeilrichtung wodurch das Wasser in den Wasserauslass 20 gedrückt wird. Damit durch den Wasserauslass 20 keine Luft angesaugt werden kann, ist ein Auslassventil 24 vorgesehen. Dieses Auslassventil 24 öffnet erst dann, wenn der Wasserdruck größer als der Luftwiderstand der Rohluftleitung 11 ist. Ein weiteres Mittel zur Verhinderung einer Luftansaugung durch den Wasserauslass stellt z.B. ein Syphon dar.

Zur Verbesserung des Wasseraustrags kann der Wasserauslass 20 als Trichter ausgebildet sein (nicht dargestellt). Durch die trichterförmige Ausbildung erfolgt eine Wasserberuhigung in dieser Zone, wodurch das Wasser ohne Turbulenzen ausgetragen werden kann. Die Öffnung des Trichters ist derart angeordnet, dass sie tangential zu dem Austragsbereich 17 des Wasserabscheider verläuft. Weiterhin kann die Öffnung bei der Hälfte des Durchmessers des Austragsbereichs 17 beginnen, wodurch ein sanfter Übergang von dem Austragsbereich 17 in den Wasserauslass 20 entsteht. Der Trichter kann derart ausgeführt sein, dass er vorzugsweise über die gleiche Breite verfügt wie der Austragsbereich 17.

In Figur 3 ist ein Ansaugsystem im Schnitt dargestellt. Der Figur 1 entsprechende Bauteile sind mit gleichen Bezugszeichen versehen. Bei diesem Ausführungsbeispiel ist der Wasserabscheider 12 mit einer Steckverbindung 25 mit der Rohluftleitung 11 dichtend verbunden. Der Wasserabscheider 12 ist einteilig ausgeführt, wodurch das Außenrohr 14 und das Innenrohr 13 unlösbar miteinander verbunden sind.

Weiterhin weist dieses Ausführungsbeispiel im Gegensatz zu Figur 1 einen Spritzkragen 26 auf, welcher den Einlassbereich 21 umrahmt, wodurch Wassertropfen, welche vom Austragsbereich 17 auf das Innenrohr 13 abtropfen, nicht in den Einlassbereich gelangen.

Ein weiterer Unterschied zu Figur 1 besteht darin, dass der Wasserabscheider 12 direkt mit einem Filtergehäuse 27 verbunden ist, wobei in dem Filtergehäuse 27 ein Filterelement 28 angeordnet ist, welches dichtend eine Rohseite 29 von einer Reinseite 30 trennt.

Weiterhin ist der Wasserauslass 20 als Öffnung ausgeführt, welche im nach unten weisenden Bereich angeordnet ist. Mit dieser Öffnung kann z.B. ein Wasserschlauch verbunden sein, welcher das Wasser abführt.

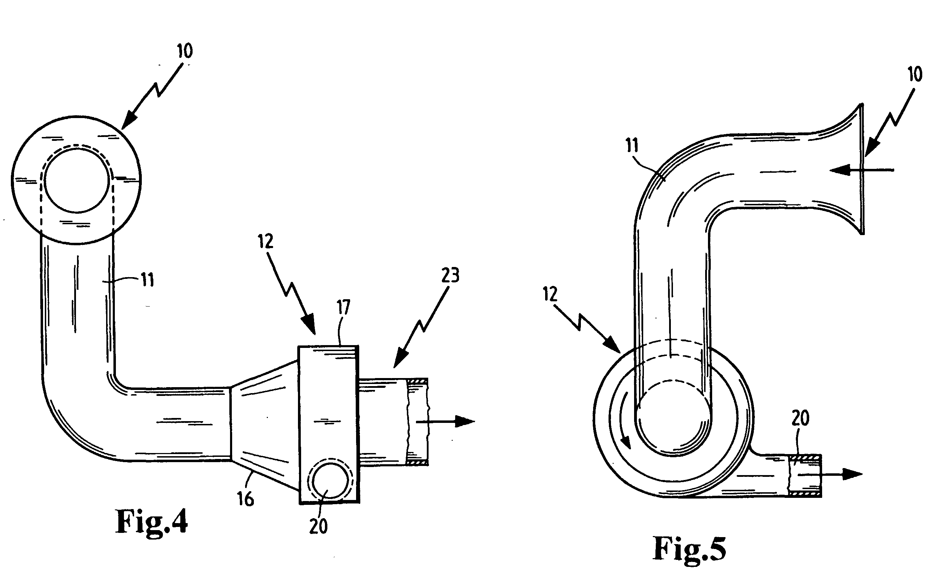

In Figur 4 ist eine schematische Darstellung des Ansaugsystems in der Hauptansicht dargestellt. Der Figur 1 entsprechende Bauteile sind mit gleichen Bezugszeichen versehen. Das Ansaugsystem weist eine Rohluftleitung 11 mit einem Rohlufteinlass 10 auf, wobei die Rohluftleitung 11 zur Erzeugung eines Dralls in der Ansaugluft über zwei 90° Winkel verfügt. Diese 90° Winkel sind im 3-dimensionalen Raum angeordnet.

In Figur 5 ist eine schematische Darstellung des Ansaugsystems gemäß Figur 4 in der Seitenansicht dargestellt. Der Figur 4 entsprechende Bauteile sind mit gleichen Bezugszeichen versehen. Durch die 90° Winkel ist ein Drall erzeugt, welcher bei diesem Ausführungsbeispiel in Pfeilrichtung verläuft.

## Patentansprüche

1. Ansaugsystem für eine Brennkraftmaschine eines Kraftfahrzeuges, aufweisend einen Rohlufteinlass (10), eine mit dem Rohlufteinlass (10) verbundene Rohluftleitung (11) und einen, an die Rohluftleitung (11) anschließenden Wasserabscheider (12), wobei die Rohluftleitung (11) korrespondierend mit der Brennkraftmaschine verbunden ist, und wobei der Wasserabscheider (12) ein Innenrohr (13) und ein Außenrohr (14) aufweist, welche in axialer Richtung zueinander angeordnet sind, wobei das Innenrohr (13) in das Außenrohr (14) hineinragt, und das Außenrohr (14) über einen Wasserauslass (20) verfügt, wobei in der Rohluftleitung (11) ein Drall erzeugbar und der Wasserabscheider (12) koaxial zu der Rohluftleitung (11) angeordnet ist. **dadurch gekennzeichnet, dass**
- das Außenrohr (14) über einen zylindrischen Außenbereich (15) mit einem ersten Durchmesser (D1) verfügt, wobei der zylindrische Außenbereich (15) einerseits mit der Rohluftleitung (11) und andererseits mit dem Abscheidebereich (16) verbunden ist, wobei der Abscheidebereich (16) konisch ausgebildet ist und über einen zweiten Durchmesser (D2) verfügt, welcher größer ist, als der erste Durchmesser (D1), und wobei das Außenrohr (14) über einen Austragsbereich (17) mit einem dritten Durchmesser (D3) verfügt, welcher mit dem zweiten Durchmesser (D2) verbunden ist, wobei der dritte Durchmesser (D3) größer ist, als der zweite Durchmesser (D2),
- das Innenrohr (13) über einen zylindrischen Einlassbereich (21) mit einem ersten Innendurchmesser (d1) verfügt, wobei der Einlassbereich (21) mit einem konischen Verzögerungsbereich (22) verbunden ist, und wobei andererseits an den Verzögerungsbereich (22) ein Auslassbereich (23) mit einem zweiten Innendurchmesser (d2) anschließt, wobei der erste Innendurchmesser (d1) kleiner ist, als der zweite Innendurchmesser (d2)
- das Innenrohr (13) dichtend mit dem Außenrohr (14) verbunden ist.

2. Ansaugsystem nach Anspruch 1, **dadurch gekennzeichnet, dass** an dem Innenrohr (13) ein Spritzkragen (26) angeordnet ist.

3. Ansaugsystem nach einem der vorangehenden Ansprüche, **dadurch gekennzeichnet, dass** der Wasserauslass (20) tangential in Drallrichtung angeordnet ist.

4. Ansaugsystem nach einem der vorangehenden Ansprüche, **dadurch gekennzeichnet, dass** der Wasserauslass (20) trichterförmig ausgeführt ist.

5. Ansaugsystem nach einem der vorangehenden Ansprüche, **dadurch gekennzeichnet, dass** der Wasserauslass (20) über ein Auslassventil (24) verfügt.

6. Ansaugsystem nach einem der vorangehenden Ansprüche, **dadurch gekennzeichnet, dass** das Innenrohr (13) direkt mit einem, dem Wasserabscheider (12) nachgeordneten Filtergehäuse (27) verbunden ist.

7. Ansaugsystem nach einem der vorangehenden Ansprüche, **dadurch gekennzeichnet, dass** der erste Durchmesser (D1) des Außenrohres (14) größer als der erste Innendurchmesser (d1) des Innenrohres (13) ist.

## Claims

1. Intake system for an internal combustion engine of a motor vehicle, including an unfiltered air inlet (10), an unfiltered air duct (11), which is connected to the unfiltered air inlet (10), and a water separator (12), which is in communication with the unfiltered air duct (11), wherein the unfiltered air duct (11) is connected in an appropriate manner to the internal combustion engine, and wherein the water separator (12) includes an inner pipe (13) and an outer pipe (14), which are disposed one relative to the other in the axial direction, wherein the inner pipe (13) projects into the outer pipe (14), and the outer pipe (14) has a water outlet (20), wherein a swirl is creatable in the unfiltered air duct (11) and the water separator (12) is disposed coaxially relative to the unfiltered air duct (11), **characterised in that**
- the outer pipe (14) has a cylindrical outer region (15) with a first diameter (D1), wherein the cylindrical outer region (15) is connected at the one end to the unfiltered air duct (11) and at the other end to the separating region (16), wherein the separating region (16) is conical and has a second diameter (D2), which is greater than the first diameter (D1), and wherein the outer pipe (14) has an discharge region (17) with a third diameter (D3), which is connected to the second diameter (D2), wherein the third diameter (D3) is greater than the second diameter (D2),
- the inner pipe (13) has a cylindrical inlet region (21) with a first internal diameter (d1), wherein the inlet region (21) is connected to a conical retarding region (22), and wherein an outlet region (23) with a second internal diameter (d2) communicates with the retarding region (22) at the other end, wherein the first internal diameter (d1) is smaller than the second internal diameter (d2),
- the inner pipe (13) is sealingly connected to the outer pipe (14).

2. Intake system according to claim 1, **characterised in that** a splash collar (26) is disposed on the inner pipe (13).

3. Intake system according to one of the preceding claims **characterised in that** the water outlet (20) is disposed tangentially in the direction of the swirl.

4. Intake system according to one of the preceding claims, **characterised in that** the water outlet (20) is funnel-shaped.

5. Intake system according to one of the preceding claims, **characterised in that** the water outlet (20) has an outlet valve (24).

6. Intake system according to one of the preceding claims, **characterised in that** the inner pipe (13) is directly connected to a filter housing (27), which is downstream from the water separator (12).

7. Intake system according to one of the preceding claims, **characterised in that** the first diameter (D1) of the outer pipe (14) is greater than the first intemal diameter (d1) of the inner pipe (13).

## Revendications

1. Système d'admission pour un moteur à combustion interne d'un véhicule automobile comprenant une entrée d'air non filtré (10), une conduite d'air non filtré (11) reliée à l'entrée d'air non filtré (10) ainsi qu'un séparateur d'eau (12) raccordé à la conduite d'air non filtré (11), et dans lequel la conduite d'air non filtré (11) est reliée de manière correspondante au moteur à combustion interne et le séparateur d'eau (12) comporte un tube intérieur (13) et un tube extérieur (14) associés dans la direction axiale, le tube intérieur (13) pénétrant dans le tube extérieur (14) et le tube extérieur (14) disposant d'une sortie d'eau (20), un écoulement en rotation étant créé dans la conduite d'air non filtré (11) alors que le séparateur d'eau (12) est monté coaxialement à la conduite d'air non filtré (11),
**caractérisé en ce que**
- le tube extérieur (14) comporte une zone extérieure cylindrique (15) ayant un premier diamètre (D1),
* la zone extérieure cylindrique (15) est reliée d'un côté à la conduite d'air non filtré (11) et de l'autre à la zone de séparation (16),
* la zone de séparation (16) est de forme conique et présente un second diamètre (D2) supérieur au premier diamètre (D1),
* le tube extérieur dispose d'une zone de sortie (17) ayant un troisième diamètre (D3) relié au second diamètre (D2), le troisième diamètre (D3) étant supérieur au second diamètre (D2),
- le tube intérieur (13) comporte une zone d'entrée cylindrique (21) ayant un premier diamètre intérieur (d1),
* la zone d'entrée (21) est reliée à une zone de décélération (22), conique, et
* d'un autre côté, la zone de décélération (22) est reliée à une zone de sortie (23) ayant un second diamètre intérieur (d2), le premier diamètre intérieur (d1) étant intérieur au second diamètre intérieur (d2), et
- le tube intérieur (13) est relié de manière étanche au tube extérieur (14).

2. Système d'admission selon la revendication 1,
**caractérisé en ce qu'**
une collerette de projection (26) est prévue sur le tube intérieur (13).

3. Système d'admission selon l'une des revendications précédentes,
**caractérisé en ce que**
la sortie d'eau (20) est tangentielle à la direction de l'écoulement en rotation.

4. Système d'admission selon l'une des revendications précédentes,
**caractérisé en ce que**
la sortie d'eau (20) est en forme d'entonnoir.

5. Système d'admission selon l'une quelconque des revendications précédentes,
**caractérisé en ce que**
la sortie d'eau (20) comporte une soupape de sortie (24).

6. Système d'admission selon l'une quelconque des revendications précédentes,
**caractérisé en ce que**
le tube intérieur (13) est relié directement à un boîtier de filtre (27) en aval du séparateur d'eau (12).

7. Système d'admission selon l'une quelconque des revendications précédentes,
**caractérisé en ce que**
le premier diamètre (D1) du tube extérieur (14) est supérieur au premier diamètre intérieur (d1) du tube intérieur (13).
